# EUROPÄISCHE PATENTSCHRIFT

(11) **EP 3 230 519 B1**
(45) Veröffentlichungstag und Bekanntmachung des Hinweises auf die Patenterteilung: **26.09.2018**
(21) Anmeldenummer: 15808188.5
(22) Anmeldetag: 10.12.2015
(51) Int. Cl.: D06N 7/00, C09D 131/04, C08L 31/04, C08L 29/04, C08K 3/26, A47G 27/02

(54) **WASSER REDISPERGIERBARE POLYMERE-PULVER FÜR TEPPICHBESCHICHTUNGS-ZUSAMMENSETZUNGEN**
WATER REDISPERSIBLE POLYMERIC POWDER FOR CARPET COATING COMPOSITIONS
PODRE POLYMÉRIQUE REDISPERSIBLE DANS L'EAU POUR DES COMPOSITIONS DE REVÊTEMENT DE TAPIS

(30) Priorität: 12.12.2014 DE 102014225773
(43) Veröffentlichungstag der Anmeldung: 18.10.2017
(73) Patentinhaber: Wacker Chemie AG, 81737 München (DE)
(72) Erfinder: MELCHIN, Timo, 84561 Mehring (DE); DIETRICH, Ulf, 84489 Burghausen (DE); KÜNSTLE, Holger, 84489 Burghausen (DE)
(74) Vertreter: Ege, Markus
(86) Internationale Anmeldenummer: PCT/EP2015/079321
(87) Internationale Veröffentlichungsnummer: WO 2016/092047

(56) Entgegenhaltungen:
- EP-A2- 0 838 509
- WO-A1-2013/171584
- WO-A2-2009/099717
- DE-A1- 19 613 931
- US-A1- 2012 077 907

## Beschreibung

Die Erfindung betrifft die Verwendung von Polymeren auf Basis ethylenisch ungesättigter Monomere in Teppichbeschichtungs-Zusammensetzungen zur Teppichherstellung.

Bei der Herstellung von Teppichen, beispielsweise Bahnware oder Teppichfliesen, wird der Teppichflor aus Faserbüscheln (Tuft) gebildet, welche beispielsweise in Form von Schlaufen in ein gewebtes oder gelegtes Trägermaterial (primary backing) gesteckt werden. Die Schlaufen sind nur lose mit dem flächigen Trägermaterial verbunden (Tufting-Teppich). Zur Herstellung von Nadelfilz-Teppichen werden die Faserbüschel vernadelt. Bei Webteppichen werden die Faserbüschel mit dem Trägermaterial verwebt.

Zur Verbesserung der Anbindung des Teppichflors an das flächige Trägermaterial wird ein Bindemittel auf die Rückseite des Trägermaterials aufgetragen. Beispielsweise können wässrige Polymerdispersionen als Schaum oder ungeschäumt aufgetragen werden(Vorstrich oder Precoat). Solche wässrigen Polymerdispersionen können mit Füllstoffen, beispielsweise Kreide, gefüllt sein und gegebenenfalls weitere Zusatzstoffe enthalten, wie Verdicker, Dispergierhilfsmittel oder Schaumhilfsmittel. Die so erhaltenen Teppich-Produkte können zur Verbesserung der Dimensionsstabilität mit einem weiteren Trägermaterial (Teppichrücken, secondary backing) ausgerüstet werden. Dabei handelt es sich im Allgemeinen um ein Gewebe aus Kunstfaser, wie Polypropylen, Polyamid oder Polyester, oder aus Naturfaser, wie Jute. Zur Anbindung des Teppichrückens an den nach dem Vorstrich erhaltenen Teppich wird erneut ein Bindemittel aufgetragen. Auch hierzu können die vorgenannten wässrigen Polymerdispersionen als Schaum oder ungeschäumt aufgetragen werden (Zweitstrich oder secondary coating).

Die WO 90/00967 A1 beschreibt die Verwendung von wässrigen Dispersionen von Vinylacetat-Ethylen-Copolymeren, Styrol-Butadien-Copolymeren oder Styrol-Acrylat-Copolymeren anstelle von PVC-Plastisol als Bindemittel bei der Teppichherstellung. Im US-Patent US 3,779,799 wird die Herstellung eines Tufting-Teppichs beschrieben, wobei als Vorstrich Bindemittel-Zusammensetzungen eingesetzt werden, welche als Bindemittel Vinylacetat-Ethylen-Copolymer-Dispersionen (VAE-Copolymer-Dispersion), Polyethylen-Dispersionen oder Dispersionen von carboxylierten Styrol-Butadien-Copolymeren enthalten. Das US-Patent US 5,026,765 beschreibt Teppichbeschichtungs-Zusammensetzungen basierend auf Vinylacetat-Ethylen-Copolymer-Dispersionen, wobei die Copolymere noch Monomereinheiten enthalten, deren Homopolymere Glasübergangstemperaturen Tg von mindestens 50°C aufweisen. Das GB-Patent GB 1,298,155 beschreibt Teppichbeschichtungs-Zusammensetzungen auf Basis von wässrigen, vernetzbaren Bindemitteln enthaltend Vinylacetat-Ethylen-Copolymere, Polyvinylalkohol (PVOH) und Glyoxal. Aus der WO 2010/089142 A1 ist eine Vinylacetat-Ethylen-Copolymer-Dispersion bekannt, welche als Bindemittel bei der Teppichherstellung eingesetzt wird. Das Copolymer enthält 1 bis 4 Gew.-% Ethylen und ist ausschließlich mit Emulgator stabilisiert, wobei gegebenenfalls kleine Mengen an Schutzkolloid zur Stabilisierung mitverwendet werden können. Zur Verbesserung der Haftung an Polyvinylbutyralfolie (als Teppichrücken) wird in der WO 2006/007157 A1 der Einsatz von Vinylacetat-Ethylen-Copolymeren vorgeschlagen, welche noch 1 bis 10 Gew.-% an Comonomereinheiten mit funktionellen Gruppen enthalten, wie Carboxyl-, Amid-, N-Methylol- oder HydroxyalkylGruppen. Bei der Herstellung des Copolymers wird ein Gemisch aus Emulgator und 0,05 bis 4 Gew.-% Schutzkolloid eingesetzt. Im US-Patent 6,359,076 wird zur Verbesserung der Wasserfestigkeit von Teppichbeschichtungen vorgeschlagen, vernetzbare Vinylacetat-Ethylen-Copolymere, welche OH-funktionelle Monomereinheiten enthalten, in Kombination mit einem Vernetzer einzusetzen. Die WO 2011/139267 A1 und WO 2011/140065 A2 lehren Teppichbeschichtungen auf Basis von Vinylacetat-Ethylen-Copolymeren, die funktionelle, vernetzbare Comonomer-Einheiten, wie Silan-funktionelle oder multifunktionelle Comonomere, und zur Stabilisierung keine Schutzkolloide, sondern Emulgatoren enthalten. Aus der WO 2012/020319 A2 oder der WO 2012/020321 A2 sind Teppiche bekannt, welche sich durch gute Flammfestigkeit oder gute Waschbarkeit auszeichnen. Als Bindemittel wurden Vinylacetat-Ethylen-Copolymer-Dispersionen mit mittleren Teilchengrößen dw von 50 bis 500 nm eingesetzt, welche mittels Polymerisation unter Stabilisierung mit Emulgator eingestellt wurden, wobei gegebenenfalls noch bis zu 3% Schutzkolloid als Costabilisator verwendet werden können. Gegenstand der WO 2013/093547 A2 sind Teppich-Bindemittel, dessen Zusammensetzung für Rezepturen mit Ruß als Füllstoff optimiert ist. Als Bindemittel werden Emulgator- und Celluloseether-stabilisierte Vinylacetat-Ethylen-Copolymer-Dispersionen eingesetzt. Die WO 2013/123210 A1 betrifft Teppiche, zu deren Herstellung Bindemittel-Gemische aus Vinylacetat-Ethylen-Copolymer-Dispersionen und Styrol-Butadien-Copolymer-Dispersionen eingesetzt wurden. Zur Verbesserung der Kompatibilität der verschiedenen Polymer-dispersionen wird vorgeschlagen, bei der VAE-Dispersion auf Polyvinylalkohol zu verzichten und bei deren Herstellung allenfalls bis zu 1,5 Gew.-% Polyvinylalkohol, bezogen auf die Comonomere, als Schutzkolloid einzusetzen. Die WO 2014/031579 A2 betrifft Teppichbeschichtungs-Zusammensetzungen, die als Bindemittel unter anderem VAE-Dispersionen enthalten können, welche mit Emulgator stabilisiert sind und gegebenenfalls noch bis zu 1,5 Gew.-% Polyvinylalkohol als Costabilisator enthalten können. Diese Dispersionen werden mit einem alpha-Olefin-Carbonsäure-Copolymer und einem Vernetzer abgemischt. In der WO 99/10396 A1 wird vorgeschlagen, zur Verbesserung der Rheologie von VAE-Dispersionen mit einem hohen Feststoffgehalt von mindestens 65 Gew.-%, diese in Gegenwart von Stabilisator-Gemischen aus mehr als 3 Gew.-%, vorzugsweise 4 bis 5 Gew.-% an niedermolekularem Polyvinylalkohol und 1 bis 4 Gew.-% nichtionischem Emulgator mit definierter HLB (hydrophilic-lipophilic balance) herzustellen. Die WO 2013/001379 A2 beschreibt mit Polyvinylalkohol stabilisierte VAE-Dispersionen. Zur Optimierung der Viskosität wird zu deren Stabilisierung ein Gemisch aus 0,5 bis 3 Gew.-% vollverseiftem Polyvinylalkohol und 1,5 bis 4 Gew.-% teilverseiftem Polyvinylalkohol verwendet. Das US-Patent US 4,921,898 betrifft wässrige Klebemittel auf Basis von Vinylacetat-Ethylen-Copolymer-Dispersionen, welche in Gegenwart einer Stabilisator-Kombination aus 2 bis 4 Gew.-% an niedermolekularem Polyvinylalkohol und 2 bis 4 Gew.-% an Emulgator hergestellt wurde. Das Klebemittel zeichnet sich durch eine schnelle Abbindung aus. In der US 4,239,563 werden wässrige Vinylacetat-Ethylen-Copolymer-Dispersionen als Bindemittel zur Verfestigung von Teppichen beschrieben. Gegenüber Styrol-Butadien-Latices wird die geringere Emission von VOCs (volatile organic compounds) hervorgehoben. Die Herstellung der VAE-Dispersionen erfolgt mittels Emulsionspolymerisation unter Verwendung von Emulgator und/oder Schutzkolloid (unter anderem Polyvinylalkohol). Die VAE-Copolymere haben einen Ethylengehalt von 30 bis 80 Gew.-%, bezogen auf das Gesamtgewicht der Comonomere. Das Patent US 4,735,986 beschreibt als Stand der Technik für Teppichbindemittel eine Zusammensetzung mit einer Vinylacetat-Ethylen-Copolymer-Dispersion, welche mit 5 Gew.-% Polyvinylalkohol stabilisiert ist, wobei sich der Polyvinylalkohol-Anteil zusammensetzt aus einem niederviskosen, teilverseiftem PVOH und einem mittelviskosen, teilverseiften PVOH. Bemängelt wird die zu niedrige Füllstoffverträglichkeit, die mangelnde Kompatibilität zu Kreiden unterschiedlicher Spezifikation, und die geringe Verträglichkeit mit Styrol-Butadien-Copolymer-Dispersionen. Zur Verbesserung des Eigenschaftsprofils wird vorgeschlagen, bei der Polymerisation ein Stabilisatorgemisch aus teilhydrolysiertem PVOH, vollhydrolysiertem PVOH und einem nichtionischen, polyalkoxylierten Emulgator einzusetzen.

WO2009/099717 offenbart Polymere in Form von in Wasser redispergierbaren Pulvern für Teppichbeschichtungs-Zusammensetzungen, wobei die Polymere auf a) Vinylaromaten, b) 1,3-Dienen und c) ethylenisch ungesättigten Mono- oder Dicarbonsäuren sowie gegebenenfalls d) auf weiteren ethylenisch ungesättigten Comonomeren basieren. US2012/0077907 beschreibt Styrol-Butadien-Copolymere beispielsweise für Teppichanwendungen. EP0838509 führt Copolymere auf Basis unterschiedlichster Monomere an, mit Fokus auf Acrylat- und Styrol-Copolymeren, zur Verwendung in Klebstoffen für das Verlegen und Verkleben von Bodenbelägen auf Untergründen. Auch die DE19613931 beschreibt Klebstoffzusammensetzungen enthaltend Polymerisate unterschiedlichster Monomerzusammensetzung zum Verkleben von Substraten, wie Fußbodenbelägen. WO2013/171584 offenbart die Verwendung von Polymeren in Form von wässrigen Dispersionen zur Herstellung von Teppichbeschichtungs-Zusammensetzungen.

Es besteht jedoch weiterhin Bedarf an Bindemitteln, mit denen die Trockenfestigkeit von Teppichen verbessert werden kann. Auch besteht Nachfrage nach Bindemitteln für Teppichbeschichtungs-Zusammensetzungen, die eine bessere Füllstoffverträglichkeit, beispielsweise gegenüber Kreide, insbesondere im Falle hochgefüllter Rezepturen aufweisen. Das genannte Problem der Füllstoffverträglichkeit tritt insbesondere auf bei Einsatz von Polymer-Dispersionen als Bindemittel, die allein mit Polyvinylalkohol stabilisiert sind. Bei Coeinsatz von Emulgatoren während der Polymerisation oder bei nachträglicher Zugabe von Emulgatoren zu den Polymer-Dispersionen kann die Füllstoffverträglichkeit der wässrigen Vinylacetat-Ethylen-Copolymer-Dispersionen zwar verbessert werden, allerdings haben Emulgatoren einen nachteiligen Einfluss auf die mechanischen Festigkeiten der damit erhaltenen Beschichtung.

Es bestand daher die Aufgabe, Bindemittel für Teppichbeschichtungs-Zusammensetzungen zur Verfügung zu stellen, mit denen die Trockenfestigkeit von Teppichen verbessert werden kann. Nach Möglichkeit sollte auch die Füllstoffverträglichkeit, insbesondere gegenüber Kreide und/oder insbesondere im Falle hochgefüllter Rezepturen verbessert werden. Hochgefüllte Rezepturen enthalten beispielsweise bis zu 1000 Gew.-% Füllstoff, bezogen auf das Bindemittel. Nach Möglichkeit sollten die Trockenfestigkeit und die vorgenannte Füllstoffverträglichkeit zugleich gesteigert werden. All dies sollte gegebenenfalls auch mit Emulgator-freien Bindemitteln erreicht werden. Die vorgenannten Ziele sollten nach Möglichkeit bei Einsatz der Bindemittel für Teppichbeschichtungs-Zusammensetzungen als Vorstrich und/oder als Zweitstrich erreicht werden.

Gegenstand der Erfindung ist die Verwendung von Polymeren auf Basis ethylenisch ungesättigter Monomere in Teppichbeschichtungs-Zusammensetzungen zur Teppichherstellung, dadurch gekennzeichnet, dass zur Herstellung der Teppichbeschichtungs-Zusammensetzungen ein oder mehrere Polymere auf Basis ethylenisch ungesättigter Monomere in Form von in Wasser redispergierbaren Pulvern (Polymerpulver) eingesetzt werden,
wobei die Polymere ausgewählt werden aus der Gruppe umfassend Mischpolymerisate von einem oder mehreren Vinylestern mit 1 bis 50 Gew.-% Ethylen;
Mischpolymerisate von Vinylacetat mit 1 bis 50 Gew.-% Ethylen und 1 bis 50 Gew.-% von einem oder mehreren weiteren Comonomeren aus der Gruppe der Vinylester mit 1 bis 13 C-Atomen im Carbonsäurerest;
Mischpolymerisate von ein oder mehreren Vinylestern, 1 bis 50 Gew.-% Ethylen und 1 bis 60 Gew.-% (Meth)Acrylsäureester von unverzweigten oder verzweigten Alkoholen mit 1 bis 15 C-Atomen; Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% (Meth)-Acrylsäureester von unverzweigten oder verzweigten Alkoholen mit 1 bis 17 C-Atomen, welche noch 1 bis 40 Gew.-% Ethylen enthalten;
Mischpolymerisate mit ein oder mehreren Vinylestern, 1 bis 50 Gew.-% Ethylen und 1 bis 60 Gew.-% Vinylchlorid sowie gegebenenfalls weiteren Vinylestern und/oder (Meth)Acrylsäureestern; wobei sich die Angaben in Gew.-% auf jeweils 100 Gew.-% aufaddieren.

Geeignete Vinylester sind beispielsweise solche von Carbonsäuren mit 1 bis 22 C-Atomen, insbesondere 1 bis 12 C-Atomen. Bevorzugt werden Vinylacetat, Vinylpropionat, Vinylbutyrat, Vinyl-2-ethylhexanoat, Vinyllaurat, Vinylmyristat, Vinylpalmitat, Vinylstearat, Vinylarachinat, 1-Methylvinylacetat, Vinylpivalat und Vinylester von α-verzweigten Monocarbonsäuren mit 9 bis 13 C-Atomen, beispielsweise VeoVa EH, d.h. der Vinylester der 2-Ethyl-Hexansäure, VeoVa9^{R} oder VeoVa10^{R} (Handelsnamen der Firma Resolution). Besonders bevorzugt ist Vinylacetat.

Geeignete Acrylsäureester oder Methacrylsäureester sind beispielsweise Ester von unverzweigten oder verzweigten Alkoholen mit 1 bis 22 C-Atomen, insbesondere 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Laurylacrylat, Myristylacrylat, Stearylacrylat, Palmitylacrylat, Laurylmethacrylat, Myrystilmethacrylat, Stearylmethacrylat oder Palmitylmethacrylat. Besonders bevorzugt sind Methylacrylat, Methylmethacrylat, n-Butylacrylat, t-Butylacrylat oder 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien oder Isopren.

Gegebenenfalls können noch 0,1 bis 10 Gew.-%, bezogen auf das Gesamtgewicht des Monomergemisches, Hilfsmonomere copolymerisiert werden. Bevorzugt werden 0,5 bis 5 Gew.-% Hilfsmonomere eingesetzt. Besonders bevorzugt werden keine Hilfsmonomere copolymerisiert.

Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch Monomere mit Hydroxy- oder Carboxyl-Gruppen, wie beispielsweise Methacrylsäure- und Acrylsäurehydroxyalkylester wie Hydroxyethyl-, Hydroxypropyl- oder Hydroxybutylacrylat oder -methacrylat sowie 1,3-Dicarbonylverbindungen wie Acetacetoxyethylacrylat, Acetacetoxypropylmethacrylat, Acetacetoxyethylmethacrylat, Acetacetoxybutylmethacrylat, 2,3-Di(acetacetoxy)propylmethacrylat und Acetessigsäureallylester. Weitere Beispiele für Hilfsmonomere sind epoxidfunktionelle Comonomere wie Glycidylmethacrylat, Glycidylacrylat, Allylglycidether, Vinylglycidether. Beispiele für Hilfsmonomere sind auch siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, vorzugsweise mit Alkyl- bzw- Alkoxygruppen mit jeweils 1 bis 2 C-Atomen, beispielsweise Vinyltrimethoxysilan, Vinyltriethoxysilan, 3-Methacryloxypropyltrimethoxysilan.

Geeignete Polymere sind Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 13 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von ein oder mehreren Vinylestern, 1 bis 50 Gew.-% Ethylen und 1 bis 60 Gew.-% (Meth)Acrylsäureester von unverzweigten oder verzweigten Alkoholen mit 1 bis 15 C-Atomen, insbesonders n-Butylacrylat, 2-Propylheptylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% (Meth)Acrylsäureester von unverzweigten oder verzweigten Alkoholen mit 1 bis 17 C-Atomen, insbesonders n-Butylacrylat, 2-Propylheptylacrylat oder 2-Ethylhexylacrylat, welche noch 1 bis 40 Gew.-% Ethylen enthalten; Mischpolymerisate mit ein oder mehreren Vinylestern, 1 bis 50 Gew.-% Ethylen und 1 bis 60 Gew.-% Vinylchlorid sowie gegebenenfalls weiteren Vinylestern und/oder (Meth)Acrylsäureestern; wobei die Polymerisate noch die genannten Hilfsmonomere in den genannten Mengen enthalten können, und sich die Angaben in Gew.-% auf jeweils 100 Gew.-% aufaddieren.

Bevorzugt werden Mischpolymerisate mit Vinylacetat und 5 bis 50 Gew.-%, insbesondere 5 bis 25 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 13 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% (Meth)Acrylsäureester von unverzweigten oder verzweigten Alkoholen mit 1 bis 17 C-Atomen, welche noch 1 bis 40 Gew.-% Ethylen enthalten; oder Mischpolymerisate mit Vinylacetat, 1 bis 25 Gew.-% Ethylen und 15 bis 35 Gew.-% Vinylchlorid; wobei sich die Angaben in Gew.-% auf jeweils 100 Gew.-% aufaddieren.

Die Monomerauswahl bzw. die Auswahl der Gewichtsanteile der Comonomere erfolgt dabei so, dass im Allgemeinen eine Glasübergangstemperatur Tg von ≤ +120°C, vorzugsweise -50°C bis +60°C, noch mehr bevorzugt -30°C bis +40°C und am meisten bevorzugt -15°C bis +20°C, resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt in bekannter Weise beispielsweise nach dem Emulsionspolymerisationsverfahren oder nach dem Suspensionspolymerisationsverfahren beispielsweise in Gegenwart von Emulgatoren oder vorzugsweise von Schutzkolloiden, vorzugsweise nach dem Emulsionspolymerisationsverfahren. Die Polymerisationstemperatur beträgt im Allgemeinen 40°C bis 120°C, vorzugsweise 60°C bis 90°C. Bei der Copolymerisation von gasförmigen Comonomeren, wie Ethylen, wird vorzugsweise unter Druck, im Allgemeinen zwischen 5 bar und 120 bar, gearbeitet. Die Initiierung der Polymerisation kann beispielsweise mit den für die Emulsionspolymerisation bzw. Suspensionspolymerisation gebräuchlichen wasserlöslichen bzw. monomerlöslichen Initiatoren oder Redox-Initiator-Kombinationen erfolgen. Zur Steuerung des Molekulargewichts können während der Polymerisation regelnde Substanzen eingesetzt werden.

Zur Stabilisierung können Schutzkolloide, gegebenenfalls in Kombination mit Emulgatoren, eingesetzt werden. Die so erhältlichen Polymere liegen vorzugsweise in Form von Schutzkolloid stabilisierten, wässrigen Dispersionen vor.

Zur Stabilisierung des Polymerisationsansatzes gebräuchliche Schutzkolloide sind beispielsweise teilverseifte oder vollverseifte Polyvinylalkohole; Polyvinylpyrrolidone; Polyvinylacetale; Polysaccharide in wasserlöslicher Form wie Stärken (Amylose und Amylopectin), Cellulosen oder deren Derivate, wie Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Die Schutzkolloide sind im Handel erhältlich und mittels dem Fachmann bekannter Verfahren zugänglich.

Bevorzugt werden Cellulosen oder deren Derivate oder teilverseifte oder vollverseifte Polyvinylalkohole. Bevorzugt ist auch der Einsatz von mindestens zwei Schutzkolloiden, insbesondere von 2 bis 4 Schutzkolloiden. Alternativ ist auch der Einsatz von nur einem Schutzkolloid bevorzugt.

Besonders bevorzugt sind teilverseifte Polyvinylalkohole mit einem Hydrolysegrad von 80 bis 95 Mol% und einer Höpplerviskosität in 4 %-iger wässriger Lösung von 1 bis 40 mPas, insbesondere 3 bis 30 mPas (Methode nach Höppler bei 20°C, DIN 53015).

Die Polymerisation erfolgt vorzugsweise in Gegenwart von 2 bis 10 Gew.-%, besonders bevorzugt 5 bis 10 Gew.-% und am meisten bevorzugt 6 bis 8 Gew.-%, jeweils bezogen auf das Gesamtgewicht der Monomere, eines oder mehrerer teilverseifter, niedermolekularer Polyvinylalkohole mit einem Hydrolysegrad von jeweils vorzugsweise 80 bis 95 Mol-%, besonders bevorzugt 85 bis 90 Mol-% am meisten bevorzugt 87 bis 89 Mol-%, und einer Höppler-Viskosität von jeweils vorzugsweise 1 bis ≤ 5 mPas und besonders bevorzugt 2 bis 4 mPas (Bestimmung nach DIN 53015, Methode nach Höppler, bei 20°C, in 4 %-iger wässriger Lösung).

Gegebenenfalls können auch teilverseifte, höhermolekulare Polyvinylalkohole mit einem Hydrolysegrad von vorzugsweise 80 bis 95 Mol-% und einer Höppler-Viskosität in 4 %-iger wässriger Lösung von vorzugsweise > 5 bis 40 mPas, besonders bevorzugt 8 bis 40 mPas (Methode nach Höppler bei 20°C, DIN 53015) im Gemisch mit den teilverseiften, niedermolekularen Polyvinylalkoholen eingesetzt werden. Gegebenenfalls können auch vollverseifte, höhermolekulare Polyvinylalkohole mit einem Hydrolysegrad von vorzugsweise 96 bis 100 Mol-%, insbesondere 98 bis 100 Mol-%, und einer Höppler-Viskosität in 4 %-iger wässriger Lösung von vorzugsweise 10 bis 56 mPas (Methode nach Höppler bei 20°C, DIN 53015) im Gemisch mit den teilverseiften, niedermolekularen Polyvinylalkoholen eingesetzt werden. Die teilverseiften, höhermolekularen Polyvinylalkohole und/oder die vollverseiften, höhermolekularen Polyvinylalkohole werden vorzugsweise jeweils in einer Menge von 0 bis 4 Gew.-% oder 0,1 bis 4 Gew.-%, jeweils bezogen auf das Gesamtgewicht der Comonomere, eingesetzt.

Bevorzugt sind auch modifizierte Polyvinylalkohole, im Folgenden auch X-PVOH genannt, mit einem Hydrolysegrad von 80 bis 99,9 Mol-%, bevorzugt von 85 bis 95 Mol.-%, und einer Höppler-viskosität, in 4 %-iger wässriger Lösung von 1 bis 30 mPas (Bestimmung nach DIN 53015 bei 20°C). Beispiele hierfür sind funktionelle Gruppen tragende Polyvinylalkohole, wie Acetoacetyl-Gruppen. Weitere Beispiele sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 13 C-Atomen, Dialkylmaleinate und Dialkylfumarate wie Diisopropylmaleinat und Diisopropylfumarat, Vinylchlorid, Vinylalkylether wie Vinylbutylether, Olefine wie Decen, Styrol. Der Anteil der hydrophoben Einheiten beträgt vorzugsweise 0,1 bis 10 Gew.-%, bezogen auf das Gesamtgewicht des teilverseiften Polyvinylalkohols. Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C1- bis C4-Aldehyden, wie Butyraldehyd, erhalten werden. Der Anteil der hydrophoben Einheiten beträgt vorzugsweise 0,1 bis 10 Gew.-%, bezogen auf das Gesamtgewicht des teilverseiften Polyvinylacetats. Der Hydrolysegrad beträgt von 80 bis 99,9 Mol-%, vorzugsweise 85 bis 95 Mol-%, die Höpplerviskosität (DIN 53015, Methode nach Höppler, 4 %-ige wässrige Lösung) von 1 bis 30 mPas, vorzugsweise 2 bis 25 mPas. Es können auch Gemische der genannten Polyvinylalkohole eingesetzt werden.

Bevorzugt sind auch Ethylen-Einheiten enthaltende Polyvinylalkohole, sogenannte E-PVOH, die beispielsweise unter dem Handelsnamen EXCEVAL® bekannt sind. E-PVOH sind teil- oder vorzugsweise vollverseifte Copolymerisate von Vinylacetat und Ethylen. Bevorzugte E-PVOH haben einen Ethylen-Anteil 0,1 zu 12 Mol-%, bevorzugt 1 bis 7 Mol-%, besonders bevorzugt 2 bis 6 Mol-% und insbesondere 2 bis 4 Mol-%. Der massemittlere Polymerisationsgrad beträgt 500 bis 5.000, bevorzugt 2.000 bis 4.500 und besonders bevorzugt 3.000 bis 4.000. Der Hydrolysegrad ist im Allgemeinen größer als 92 Mol-%, bevorzugt 94,5 bis 99,9 Mol-% und besonders bevorzugt 98,1 bis 99,5 Mol-%. Gegebenenfalls können auch ein oder mehrere ethylenmodifizierter Polyvinylalkohole E-PVOH allein oder in Kombinationen mit einem oder mehreren der weiter oben genannten Polyvinylalkohole eingesetzt werden.

Der Polyvinylalkoholanteil kann dabei insgesamt vor der Polymerisation vorgelegt werden, oder insgesamt während der Polymerisation zudosiert werden, oder teilweise vorgelegt und teilweise zudosiert werden. Der Polyvinylalkoholanteil kann auch teilweise vor oder während der Polymerisation zugegeben werden und der Rest nach Abschluss der Polymerisation nachträglich zugegeben werden, wobei der Anteil, welcher vor oder während der Polymerisation zugegeben wird, vorzugsweise mindestens 2 Gew.-%, besonders bevorzugt mindestens 4 Gew.-% beträgt, jeweils auf das Gesamtgewicht der Comonomere bezogen.

Gegebenenfalls können zusätzlich Emulgatoren bei der Polymerisation verwendet werden, beispielsweise 0,1 bis 2,0 Gew.-%, bezogen auf das Gesamtgewicht der Comonomere. Vorzugsweise werden während der Polymerisation keine Emulgatoren verwendet und/oder keine Emulgatoren nachträglich zugegeben. Vorzugsweise sind die Polymere nicht Emulgator-stabilisiert. Besonders bevorzugt enthalten die Polymere in Form von in Wasser redispergierbaren Pulvern oder die Teppichbeschichtungs-Zusammensetzungen keine Emulgatoren.

Beispiele für Emulgatoren sind anionische, kationische oder nichtionische Emulgatoren, wie anionische Tenside, wie Alkylsulfate mit einer Kettenlänge von 8 bis 18 C-Atomen, Alkyl- oder Alkylarylethersulfate mit 8 bis 30 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 EthylenoxidEinheiten. Im Allgemeinen werden 1 bis 5 Gew.-% Emulgatoren eingesetzt, bezogen auf das Gesamtgewicht der Monomere. Vorzugsweise wird ohne Zusatz von Emulgatoren polymerisiert.

Die so erhältlichen wässrigen Dispersionen haben einen Feststoffgehalt von vorzugsweise 30 bis 75 Gew.-%, besonders bevorzugt 50 bis 60 Gew.-%.

Zur Überführung der Polymere in Wasser redispergierbare Polymerpulver können die Dispersionen, gegebenenfalls nach Zusatz von Trocknungshilfsmittel, getrocknet werden, beispielsweise mittels Wirbelschichttrocknung, Gefriertrocknung oder Sprühtrocknung. Vorzugsweise werden die Dispersionen sprühgetrocknet. Die Sprühtrocknung kann dabei in üblichen Sprühtrocknungsanlagen erfolgen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

In der Regel wird das Trocknungshilfsmittel in einer Gesamtmenge von 0,5 bis 30 Gew.-%, bezogen auf die polymeren Bestandteile der Dispersion, eingesetzt. Geeignete Trocknungshilfsmittel sind beispielsweise Schutzkolloide, vorzugsweise die oben genannten Schutzkolloide. Besonders bevorzugt sind Polyvinylalkohole, insbesondere mit einer Höpplerviskosität in 4 %-iger wässriger Lösung von 1 bis 40 mPas, besonders bevorzugt 4 bis 25 mPas und am meisten bevorzugt 4 bis 13 mPas (Methode nach Höppler bei 20°C, DIN 53015).

Die Gesamtmenge an Schutzkolloid beträgt vorzugsweise 1 bis 30 Gew.-%, besonders bevorzugt 3 bis 20 Gew.-% und am meisten bevorzugt 5 bis 10 Gew.-%, bezogen auf das Gesamtgewicht der polymeren Bestandteile der Dispersion, oder bezogen auf das Gesamtgewicht der in Wasser redispergierbaren Polymerpulver.

Bei der Verdüsung hat sich vielfach ein Gehalt von bis zu 1,5 Gew.-% Antischaummittel, bezogen auf das Basispolymerisat, als günstig erwiesen. Das Pulver kann mit einem Antiblockmittel (Antibackmittel), vorzugsweise 0,3 bis 30 Gew.-% und besonders bevorzugt 0,3 bis 15 Gew.-%, bezogen auf das Gesamtgewicht polymerer Bestandteile, ausgerüstet werden. Antiblockmittel dienen beispielsweise zur Erhöhung der Lagerfähigkeit der Pulver durch Verbesserung der Verblockungsstabilität, insbesondere bei Pulvern mit niedriger Glasübergangstemperatur. Beispiele für Antiblockmittel sind Ca- bzw. Mg-Carbonat, Talk, Gips, Kieselsäure, beispielsweise pyrogene Kieselsäure, gefällte Kieselsäure oder hydrophob modifizierte Kieselsäure, Kaoline, wie Metakaolin, oder Silicate. Bevorzugte Antiblockmittel sind Kieselsäuren, Silicate, Kaoline und Kreiden. Die Antiblockmittel haben Teilchengrößen von vorzugsweise 150 nm bis 40 µm, besonders bevorzugt 200 nm bis 5 µm und am meisten bevorzugt 500 nm bis 3 µm (Bestimmung mit dem Messgerät Coulter LS - Tornado Dry Powder System).

Die Polymere werden vorzugsweise in Form von Schutzkolloid-stabilisierten, in Wasser redispergierbaren Polymerpulvern eingesetzt.

Teppichbeschichtungs-Zusammensetzungen können hergestellt werden aus einem oder mehreren Polymeren gemäß Anspruch 1 in Form von in Wasser redispergierbaren Pulvern (Polymerpulver), 100 bis 1400 Gew.-% Füllstoffen, bezogen auf das Gewicht des Polymerpulvers, Wasser, gegebenenfalls einem oder mehreren Additiven und gegebenenfalls einem oder mehreren Zusatzstoffen.

Die Teppichbeschichtungs-Zusammensetzungen sind geeignet zur Verfestigung von Teppichen, beispielsweise Bahnwaren oder Teppichfliesen.

Der Feststoffgehalt der Teppichbeschichtungs-Zusammensetzungen beträgt vorzugsweise 72 bis 83 Gew.-%, besonders bevorzugt 75 bis 80 Gew.-%, jeweils bezogen auf das Gesamtgewicht der Teppichbeschichtungs-Zusammensetzungen. Die Teppichbeschichtungs-Zusammensetzungen haben in Abwesenheit von Additiven oder Zusatzstoffen eine Brookfield RV Viskosität von vorzugsweise ≤ 7000 mPas, besonders bevorzugt ≤ 3000 mPa s (Messung mit Brookfield RV Messgerät mit Spindel 4, 20 Upm, bei 25°C)

Geeignete Füllstoffe sind beispielsweise Kaolin, Talk, Flussspat, Flugasche, Aluminiumtrihydrat, vorzugsweise Kreide.

Beispiele für Additive sind Verdickungsmittel, wie Polyacrylate oder Celluloseether, oder Schaumhilfsmittel. Im Falle des Schaumauftrags werden vorzugsweise Schaumhilfsmittel zugegeben. Verdicker können zur Einstellung der Zielviskosität der Teppichbeschichtungs-Zusammensetzungen zugegeben werden. Im Allgemeinen reicht dazu eine Menge von 0,1 bis 6 Gew.-% und vorzugsweise 1 bis 3 Gew.-%, jeweils bezogen auf das Polymerpulver. Vorzugsweise wird auf diese Weise eine Brookfield Viskosität von 2000 bis 10000 mPas eingestellt (Messung mit Brookfield RV Messgerät mit Spindel 4, 20 Upm, bei 25°C). Bei der erfindungsgemäßen Vorgehensweise kann aber auch auf Verdickungsmittel verzichtet werden.

Übliche Zusatzstoffe sind beispielsweise Dispergiermittel, Netzmittel, Pigmente, Hydrophobierungsmittel oder Biozide, wie Formaldehyd-Depotstoffe, Isothiazolinone, Phenole oder quartäre Ammoniumverbindungen. Vorzugsweise sind die Polymerpulver und/oder die Teppichbeschichtungs-Zusammensetzungen frei von Bioziden.

Die Teppichbeschichtungs-Zusammensetzungen enthalten 100 bis 1400 Gew.-Teile Füllstoff auf 100 Teile Polymerpulver. Dies wird auch als Füllgrad von 100% bis 1400% bezeichnet. Die Menge an Füllstoffen in der Formulierung kann in Abhängigkeit von den gewünschten Beschichtungseigenschaften variieren. Je höher der Füllstoffanteil (Füllgrad) umso geringer sind die mechanischen Eigenschaften.

Die erfindungsgemäßen Teppichbeschichtungs-Zusammensetzungen zeichnen sich durch eine hohe Füllstoffverträglichkeit aus. So werden Teppichbeschichtungs-Zusammensetzungen zugänglich beispielsweise bestehend aus Polymerpulver, Füllstoffen und Wasser, welche bei Füllgraden von 400 Gew.-% bis 1400 Gew.-% Füllstoff, bezogen auf das eingesetzte Polymerpulver, und bei einem Feststoffgehalt von 75 bis 85 Gew.-% eine Brookfield RV Viskosität von < 7000 mPas und besonders bevorzugt von < 3000 mPa s aufweisen (Messung mit Brookfield RV Messgerät mit Spindel 4, 20 Upm, bei 25°C).

Ist die Viskosität einer Teppichbeschichtungs-Zusammensetzung vor Zugabe des Verdickungsmittels höher, verlängern sich die Einarbeitungszeiten für den Füllstoff, was im industriellen Maßstab im Allgemeinen inakzeptabel ist, und es besteht die Gefahr der Bildung von nicht dispergierten Füllstoffklumpen, die das Teppichgewebe zerstören können.

Für den Vorstrich werden vorzugsweise Teppichbeschichtungs-Zusammensetzungen mit Füllgraden von 300% bis 1400% verwendet. Besonders bevorzugt sind Füllgrade von 600% bis 1000% für Vorstriche für Wohnanwendungen und 300% bis 600% für kommerzielle Anwendungen, wie Büro, Hotel oder Schiffe.

Für den Zweitstrich werden vorzugsweise Teppichbeschichtungs-Zusammensetzungen mit Füllgraden von 275% bis 600% für Wohnanwendungen und 200% bis 275% für kommerzielle Anwendungen, wie Büro, Hotel oder Schiffe, verwendet.

Zur Herstellung der Teppichbeschichtungs-Zusammensetzungen kann so vorgegangen werden, dass die Polymerpulver in Wasser redispergiert und anschließend Füllstoffe eingerührt werden. Alternativ können die Polymerpulver und Füllstoffe auch räumlich getrennt, aber zeitlich gemeinsam in Wasser gegeben werden. Schließlich ist es auch möglich, zunächst eine Trockenmischung herzustellen umfassend Polymerpulver, Füllstoffe und gegebenenfalls Additive sowie gegebenenfalls Zusatzstoffe. Solche Trockenmischungen können dann für die Herstellung von Teppichbeschichtungs-Zusammensetzungen mit Wasser gemischt werden. Etwaige Additive und Zusatzstoffe können generell zu einem beliebigen Zeitpunkt, vorzugsweise vor Zugabe von Füllstoffen zugegeben werden. Für das Herstellen der Teppichbeschichtungs-Zusammensetzungen ist das hierfür etablierte, dem Fachmann bekannte Equipment geeignet.

Teppiche können mit einer oder mehreren erfindungsgemäßen Teppichbeschichtungs-Zusammensetzungen im Vorstrich und/oder Zweitstrich beschichtet sind.

Die Teppichbeschichtungs-Zusammensetzungen können vorteilhafterweise nach bekannten Verfahren in bestehenden Anlagen zur Teppichherstellung eingesetzt werden.

Die Teppichbeschichtungs-Zusammensetzungen können zur Herstellung von Tufting-Teppichen, Webteppichen oder Nadelfilzteppichen verwendet werden.

Die erfindungsgemäß hergestellten Teppiche zeichnen sich überraschenderweise durch hohe mechanische Festigkeiten, insbesondere hohe Trockenfestigkeiten aus, gerade auch im Vergleich zu auf herkömmliche Weise unter Einsatz von wässrigen Polymerdispersionen als Ausgangsstoff hergestellten Teppichen.

Vorteilhafterweise kann beim erfindungsgemäßen Einsatz von Polymeren in Teppichbeschichtungs-Zusammensetzungen auf Biozide verzichtet werden - im Gegensatz zu Polymerdispersionen, die zum Schutz vor mikrobiellem Befall generell mit Bioziden ausgestattet werden. Mikrobieller Befall kann zu pH-Änderungen, Viskositätsänderungen, Geruchsbildung, Verfärbung, Rückstandsbildung, Phasenseparation und allgemein zum Verlust technischer Eigenschaften führen. Darüber hinaus werden Konservierungsmittel, insbesondere die technisch etablierte Gruppe der Isothiazolinone, aufgrund ihrer hautsensibilisierenden Eigenschaften kritisch gesehen. Bei der Lagerung von wässerigen Polymerdispersionen, besonders unter warmen Bedingungen, kommt es in Lagerbehältern zu verstärkter Hautbildung. Die Polymerhäute müssen daher in regelmäßigen Abständen aus den Lagerbehältern entfernt werden und diese anschließend aufwändig gereinigt werden. Auch dieses Problem tritt beim erfindungsgemäßen Einsatz von Polymerpulvern nicht auf. Darüber hinaus sind die Transportkosten von Polymerpulvern im Vergleich zu Polymerdispersionen niedriger, da kein Wasser mittransportiert werden muss. Weiterhin ermöglichen Polymerpulver bei der Herstellung von Teppichrückenbeschichtungen ein flexibleres Handling von Bindemitteln, da im Gegensatz zu wässerigen Dispersionen der Einsatz von Feststoffen nicht zum Auftreten von unverträglichkeitsbedingten Verstopfungen in Rohrleitungen führt und der Wechsel von Bindemitteln vereinfacht wird.

Beim erfindungsgemäßen Einsatz von Polymerpulvern für die Herstellung von Teppichbeschichtungs-Zusammensetzungen wurde überraschenderweise gefunden, dass auf den Einsatz von Verdickungsmitteln zur Einstellung der Viskosität der Teppichbeschichtungs-Zusammensetzungen verzichtet werden kann - im Gegensatz zur entsprechenden Verwendung von Polymerdispersionen. Typische Einsatzmengen an Verdickungsmittel liegen bei Anwendungen mit Polymerdispersionen zwischen 0,3 bis 1,5 Gew.-%, bezogen auf die Formulierung. Die Einsparung des Verdickungsmittels reduziert die Kosten und den Formulierungsaufwand.

Beim erfindungsgemäßen Einsatz von Polymerpulvern zur Herstellung von Teppichrückenbeschichtungen wurde weiter gefunden, dass mit Antiblockmitteln die Viskosität der Teppichbeschichtungs-Zusammensetzungen gesteuert werden kann und auch deswegen auf den Einsatz von Verdickungsmitteln verzichtet werden kann. Besonders für Füllgrade > 600% kann auf diese Weise die Einstellung der Formulierungsviskosität nach Füllstoff-, Additiv- und Zusatzstoff-Zugabe allein durch die Menge an Antiblockmittel, insbesondere mit Silica-basiertem Antiblockmittel gesteuert werden.

Die nachfolgenden Beispiele dienen der weiteren Erläuterung der Erfindung:

### Herstellung von Vinylacetat-Copolymeren in Form von wässrigen Dispersionen

### Dispersion 1 (D1)

Folgende Komponenten wurden in einem mit Stickstoff gespülten 590 L Druckreaktor vorgelegt:

| | |
|---|---|
| 134,9 kg | deionisiertes Wasser, |
| 75,9 kg | einer 20 Gew.-%-igen wässerigen Lösung eines Polyvinylalkohols mit einem mittleren Hydrolysegrad von 88 mol% und einer Höppler-Viskosität von 4 mPa s (Bestimmung nach DIN 53015, bei 20°C, in 4 %-iger wässriger Lösung), |
| 12,5 kg | einer 10 Gew.-%-igen wässerigen Lösung eines Polyvinylalkohols mit einem mittleren Hydrolysegrad von 88 mol% und einer Höppler-Viskosität von 23-26 mPa s (Bestimmung nach DIN 53015, bei 20°C, in 4 %-iger wässriger Lösung), |
| 224 kg | Vinylacetat, |
| 0,48 kg | einer 1,0 Gew.-%-igen wässerigen Ammoniumeisensulfat-Lösung. |

Die Vorlage wurde mit 250 mL Ameisensäure (98 Gew.-%-ig) auf einen pH Wert von 4,0 eingestellt.

Unter Rühren (240 upm) wurde die Vorlage auf 55°C aufgeheizt und Ethylen bis zu einem Druck von 20 bar aufgedrückt. Bei Erreichen der Temperatur von 55°C und einem Druck von 20 bar wurden die Initiatordosierungen, bestehend aus einer wässerigen 3 Gew.-%-igen tert-Butylhydroperoxid-Lösung (TBHP) und einer wässerigen 5 Gew.-%-igen Ascorbinsäure-Lösung, mit jeweils 700 g/h gestartet. Nach Reaktionsstart, deutlich erkennbar am Anstieg der Reaktorinnentemperatur, wurden die Reaktorinnentemperatur mit Hilfe der freiwerdenden Reaktionswärme auf 90°C und der Druck auf 48 bar angehoben. Die Initiatordosierungen wurden zur Kontrolle der Reaktionswärme jeweils auf 350 g/h reduziert. 45 Minuten nach Reaktionsbeginn wurden eine Vinylacetat- und eine Polyvinylalkohol-Dosierung gestartet. Vinylacetat wurde innerhalb von 90 Minuten mit einer Rate von 40 kg/h (= 60 kg Vinylacetat) in den Reaktor dosiert, der Polyvinylalkohol, bestehend aus einer 10 Gew.-%-igen wässerigen Lösung eines Polyvinylalkohols mit einem mittleren Hydrolysegrad von 88 mol% und einer Höppler Viskosität von 4 mPa s (Bestimmung nach DIN 53015, bei 20°C, in 4 %-iger wässriger Lösung), wurde innerhalb von 120 Minuten mit einer Rate von 14 kg/h (= 28,0 kg wässerige Polyvinylalkohol Lösung). Ethylen wurde während der Polymerisation bei einem Solldruck von 44 bar nachdosiert, bis eine Gesamtethylenmenge von 34 kg dosiert war.

Nach Ende der Dosierungen wurden die Initiatordosierungen noch 30 Minuten mit jeweils 1300 g/h nachdosiert, wobei der Druck auf 20 bar abfiel. Anschließend wurde der Ansatz auf 65°C abgekühlt und in einen Drucklosreaktor (Niederdruckreaktor) überführt und dort bei einem Druck von 700 mbar abs. durch Zugabe von 1 kg tert.-Butylhydroperoxid-Lösung (10 Gew.-% in Wasser) und 2 kg Ascorbinsäure-Lösung (5 Gew.-% in Wasser) nachpolymerisiert.
Festgehalt: 58 Gew.-%
Viskosität: 1800 mPa s (Brookfield, Spindel 2, 20 upm, 23°C)
Teilchengröße: Dw 1,0 µm, (Coulter LS)
Glasübergangstemperatur: 15,0°C (DSC)
Schutzkolloid: 6,2 Gew.-%, bezogen auf Comonomere

### Dispersion 2 (D2)

Wie Dispersion 1, jedoch mit folgendem Monomerverhältnis:
85 Gew.-% Vinylacetat und 15 Gew.-% Ethylen.
Festgehalt: 50 Gew.-%
Viskosität: 350 mPa s (Brookfield, Spindel 1, 20 upm, 23°C)
Teilchengröße: Dw 1,0 µm, (Coulter LS)
Glasübergangstemperatur: 10,0°C (DSC)
Schutzkolloid: 6,5 Gew.-%, bezogen auf Comonomere

### Dispersion 3 (D3)

Wie Dispersion 1, jedoch mit folgendem Monomerverhältnis:
77 Gew.-% Vinylacetat und 23 Gew.-% Ethylen.
Festgehalt: 54 Gew.-%
Viskosität: 280 mPa s (Brookfield, Spindel 1, 20 upm, 23°C)
Teilchengröße: Dw 1,0 µm, (Coulter LS)
Glasübergangstemperatur: -6,0°C (DSC)
Schutzkolloid: 6,3 Gew.-%, bezogen auf Comonomere

### Dispersion 4 (D4)

In einem Druckreaktor mit einem Volumen von 600 Liter wurden folgende Komponenten vorgelegt:

| | |
|---|---|
| 106 kg | Wasser, |
| 55 kg | einer 20 Gew.-%-igen wässrigen Lösung eines teilverseiften Polyvinylalkohols mit einem Hydrolysegrad von 88 Mol-% und einer Höpplerviskosität von 4 mPas (bestimmt nach DIN 53015 bei 20'C in 4 Gew.-%-iger wässriger Lösung), |
| 51 g | Ameisensäure (85 Gew.-%-ig in Wasser), |
| 552 g | Eisenammoniumsulfatlösung (1 Gew.-%-ig in Wasser). |

Der Reaktor wurde evakuiert. Anschließend wurden zur Vorlage 111 kg Vinylacetat und 41 kg Vinylchlorid gegeben.

Anschließend wurde der Reaktor auf 55°C aufgeheizt und mit einem Ethylendruck von 53 bar beaufschlagt (entsprechend einer Menge von 42 kg Ethylen). Die Polymerisation wurde durch Start der Dosierung einer 3 Gew.-%-igen wässrigen Kaliumpersulfatlösung und einer 1,5 Gew.-igen wässrigen Na-hydroxymethansulfinatlösung (Brüggolit) mit je einer Rate von 4,3 kg/h gestartet.

30 Minuten nach Polymerisationsbeginn wurde eine Monomermischung, bestehend aus 55 kg Vinylacetat und 28 kg Vinylchlorid während 2,5 Stunden zudosiert. Eine wässrige Dosierung, bestehend aus 33 kg der vorgenannten 20 Gew.-%-igen Polyvinylalkohollosung und 17 kg Wasser, wurde ebenfalls 30 Minuten nach Reaktionsbeginn mit einer Rate von 20 kg/h während einem Zeitraum von 2,5 h dosiert. Nach Ende der Monomer- und der wässrigen Dosierung liefen die Initiatordosierungen für weitere 90 Minuten, um den Ansatz auszupolymerisieren. Die Gesamtpolymerisationszeit betrug 5 Stunden. Die Dispersion wurde anschließend zur Abtrennung von überschüssigem Ethylen und Vinylchlorid in den Drucklosreaktor (Niederdruckreaktor), in dem ein Druck von 0,7 bar abs. angelegt wurde, transferiert und dort durch Zugabe von 1,6 kg einer 10 Gew.-%-igen wässrigen t-Butylhydroperoxidlösung und 1,6 kg einer 5 Gew.-%-igen wässrigen Na-hydroxymethansulfinatlösung (Brüggolit) nachpolymerisiert. Der pH-Wert wurde durch Zugabe von Natronlauge (10 Gew.-%-ige wässrige Lösung) auf 5 eingestellt. Zuletzt wurde der Ansatz über ein 250 µm Sieb aus dem Drucklosreaktor abgefüllt.
Festgehalt: 55 Gew.-%
Viskosität: 350 mPa s (Brookfield, Spindel 2, 20 upm, 23°C)
Teilchengröße: Dw 0,750 µm, (Coulter LS)
Glasübergangstemperatur: 15°C (DSC)
Schutzkolloid: 6,0 Gew.-%, bezogen auf Comonomere

### Dispersion 5 (D5)

Folgende Komponenten wurden in einem mit Stickstoff gespülten 472 L Druckreaktor vorgelegt:

| | |
|---|---|
| 96,6 kg | deionisiertes Wasser, |
| 16,0 kg | einer 20 Gew.-%-igen wässerigen Lösung eines Polyvinylalkohols mit einem mittleren Hydrolysegrad von 88 mol% und einer Höppler-Viskosität von 4 mPa s (Bestimmung nach DIN 53015, bei 20°C, in 4 %-iger wässriger Lösung), |
| 32,0 kg | einer 20 Gew.-%-igen wässrigen Lösung eines teilverseiften Copolymeren aus Vinylacetat und VeoVa®10, mit einem Hydrolysegrad von 88 Mol%, einer Höpplerviskosität von 4 mPas (Bestimmung nach DIN 53015, bei 20°C, in 4 %-iger wässriger Lösung), das zu 2 Gew.-% gelöst in Wasser eine Oberflächenspannung von 37 mN/m erzeugte, |
| 39,9 kg | n-Butylacrylat, |
| 39.9 kg | Styrol, |
| 0,62 kg | einer 1,0 Gew.-%-igen wässerigen Ammoniumeisensulfat-Lösung. |

Die Vorlage wurde mit 900 ml Ameisensäure (10 Gew.-%-ig) auf einen pH Wert von 4,0 eingestellt.

Unter Rühren (75 upm) wurde die Vorlage auf 30°C aufgeheizt. Bei Erreichen der Temperatur von 30°C wurden die Initiatordosierungen, bestehend aus einer wässerigen 1 Gew.-%-igen tert-Butylhydroperoxid-Lösung (TBHP) und einer wässerigen 1,5 Gew.-%-igen Na-hydroxymethansulfinatlösung (Brüggolit), mit jeweils 2,2 kg/h gestartet. Nach Reaktionsstart, deutlich erkennbar am Anstieg der Reaktorinnentemperatur, wurde die Reaktorinnentemperatur mit Hilfe der freiwerdenden Reaktionswärme auf 70°C innerhalb von 50 min angehoben.

40 Minuten nach Reaktionsbeginn wurden eine Styrol- und eine Butylacrylat-Dosierung gestartet. Beide Monomere wurden gemeinsam innerhalb von 150 Minuten mit einer Rate von 32 kg/h (= 80 kg Monomer bestehend aus 40 kg Styrol und 40 kg n-Butylacrylat) in den Reaktor dosiert

Nach Ende der Monomer-Dosierung wurden die Initiatordosierungen noch 90 Minuten bei 2,2 kg/h nachdosiert. Anschließend wurde der Ansatz auf 45°C abgekühlt und in einen Drucklosreaktor (Niederdruckreaktor) überführt und dort bei einem Druck von 700 mbar abs. durch Zugabe von 1,5 kg tert.-Butylhydroperoxid-Lösung (10 Gew.-% in Wasser) und 2,7 kg Na-hydroxymethansulfinatlösung (Brüggolit) (10 Gew.-% in Wasser) nachpolymerisiert.
Festgehalt: 51,2 Gew.-%
Viskosität: 1600 mPa s (Brookfield, Spindel 3, 20 upm, 23°C)
Teilchengröße: Dw 1,2 µm, (Coulter LS)
Glasübergangstemperatur: 20°C (DSC)
Schutzkolloid: 6,0 Gew.-%, bezogen auf Comonomere

### Dispersion 6 (D6)

### Vinylchlorid-Copolymer:

In einem Druckreaktor mit einem Volumen von 570 Liter wurden folgende Komponenten in den vorevakuierten Reaktor vorgelegt:

| | |
|---|---|
| 66,9 kg | Wasser, |
| 6,3 kg | einer 20 Gew.-%-igen wässrigen Lösung eines teilverseiften Polyvinylalkohols mit einem Hydrolysegrad von 88 Mol-% und einer Höpplerviskosität von 4 mPas (bestimmt nach DIN 53015 bei 20°C in 4 Gew.-%-iger wässriger Lösung), |
| 40 g | Ameisensäure (10 Gew.-%-ig in Wasser), |
| 15 g | Eisenammoniumsulfat (100 Gew.-%-ig). |

Der Reaktor wurde erneut evakuiert und der Rührer mit 200 upm eingefahren. Anschließend wurden zur Vorlage Ethylen unter Aufheizen des Reaktors auf 65°C bis zu einem Ethylendruck von 75 bar dosiert (entsprechend einer Menge von 41,8 kg Ethylen). Die Polymerisation wurde durch Start der Dosierung einer 10 Gew.-%-igen wässrigen t-Butylhydroperoxidlösung (TBHP) mit 1,9 kg/h und einer 5 Gew.-%-igen wässrigen Na-hydroxymethansulfinatlösung (Brüggolit) mit einer Rate von 3,7 kg/h gestartet.

5 Minuten nach Polymerisationsbeginn wurden Comonomere, bestehend aus 177,6 kg Vinylchlorid (Rate 39,5 kg/h) und 31,3 kg Vinyllaurat (Rate 7 kg/h) jeweils innerhalb von 4,5 Stunden zudosiert. Eine wässrige Dosierung, bestehend aus 108,6 kg der vorgenannten 20 Gew.-%-igen Polyvinylalkohol-lösung und 54,4 kg Wasser, wurde ebenfalls 5 Minuten nach Reaktionsbeginn mit einer Rate von 36,2 kg/h innerhalb eines Zeitraums von 4,5 h dosiert. Nach Ende der Monomer- und der wässrigen Dosierung liefen die Initiatordosierungen für weitere 60 Minuten, um den Ansatz auszupolymerisieren. Die Gesamtpolymerisationszeit betrug 5,5 Stunden. Die Dispersion wurde anschließend zur Abtrennung von überschüssigem Ethylen und Vinylchlorid in den Drucklosreaktor (Niederdruckreaktor), in dem ein Druck von 0,7 bar abs.

angelegt wurde, transferiert und dort durch Zugabe von 3,4 kg einer 10 Gew.-%-igen wässrigen t-Butylhydroperoxidlösung und 5,9 kg einer 5 Gew.-%-igen wässrigen Na-hydroxymethansulfinatlösung (Brüggolit) nachpolymerisiert. Der pH-Wert wurde durch Zugabe von Natronlauge (10 Gew.-%-ige wässrige Lösung) auf 5 eingestellt. Zuletzt wurde der Ansatz über ein 250 µm Sieb aus dem Drucklosreaktor abgefüllt.
Festgehalt: 52 Gew.-%
Viskosität: 700 mPa s (Brookfield, Spindel 2, 20 upm, 23°C)
Glasübergangstemperatur: 5°C (DSC)
Schutzkolloid: 9,2 Gew.-%, bezogen auf Comonomere

### Herstellung der Polymere in Form von in Wasser redispergierbaren Pulvern (Polymerpulver)

Den Dispersionen D1 bis D6 wurden jeweils
2,0 Gew.-%, bezogen auf den Polymergehalt der jeweiligen Dispersion (fest/fest), eines teilverseiften Polyvinylalkohols mit einem Hydrolysegrad von 88 Mol-% und einer Höpplerviskosität von 13 mPas und
6,5 Gew.-%, bezogen auf den Polymergehalt der jeweiligen Dispersion (fest/fest), eines teilverseiften Polyvinylalkohols mit einem Hydrolysegrad von 88 Mol-% und einer Höpplerviskosität von 4 mPas (je bestimmt nach DIN 53015 bei 20°C in 4%-iger wässeriger Losung) zugegeben.

Anschließend wurde durch Sprühtrocknung, in an sich etablierter Weise, mit einer Eintrittstemperatur von 130°C und einer Austrittstemperatur von 80°C, getrocknet und das jeweilige Copolymer in Form eines in Wasser redispergierbaren Pulvers erhalten. Den Pulvern wurden 3 Gew.-% Kaolin und 14 Gew.-% Calciumcarbonat als Antibackmittel zugesetzt, jeweils bezogen auf Pulver trocken.

Folgende Pulver P1 bis P6 wurden erhalten:
Pulver 1 (P1): mit Dispersion D1;
Pulver 2 (P2): mit Dispersion D2;
Pulver 3 (P3): mit Dispersion D3;
Pulver 4 (P4): mit Dispersion D4;
Pulver 5 (P5): mit Dispersion D5;
Pulver 6 (P6): mit Dispersion D6;

Herstellung der Teppichbeschichtungs-Zusammensetzungen:

### Vergleichsbeispiele:

Mit den Dispersionen D1 bis D6 wurde je eine Teppichbeschichtungs-Zusammensetzung hergestellt basierend auf folgender Rezeptur:
100 Gew.-Teile der jeweiligen Dispersion,
450 Gew.-Teile Kreide (Carbocia 80, Carbocia) (Füllstoff),
0,5 Gew.-Teile Schaumhilfsmittel (Natriumlaurylsulfat).

Die Angaben in Gew.-Teile beziehen sich auf das Trockengewicht der jeweiligen Teppichbeschichtungs-Zusammensetzung.

Wasser wurde in einer Menge zugesetzt, so dass Teppichbeschichtungs-Zusammensetzungen mit einem Festgehalt von 81,5% resultierten.

Zur Herstellung einer Teppichbeschichtungs-Zusammensetzung wurden das Wasser und die jeweilige Dispersion vorgelegt und unter Rühren der Füllstoff und danach das Schaumhilfsmittel zugegeben.

Die Teppichbeschichtungs-Zusammensetzungen hatten einen Festgehalt von 81,5% und einen Füllgrad von 450 Gew.-%.

Anschließend wurde durch Zugabe eines Verdickungsmittels (Acrylatverdicker Matco TR 10, Matco) bzw. von Verdünnungswasser eine Endviskosität von 6500 mPas eingestellt (Messung mit Brookfield RV Messgerät mit Spindel 4, 20 Upm, bei 25°C). Im Allgemeinen sind Endviskositäten von 6000 bis 7000 mPa s akzeptabel.

Die in den Teppichbeschichtungs-Zusammensetzungen enthaltenen Mengen an Verdickungsmittel ergeben sich aus Tabelle 1.

### Beispiele:

Mit den Pulvern P1 bis P6 wurde je eine Teppichbeschichtungs-Zusammensetzung hergestellt basierend auf folgender Rezeptur:
100 Gew.-Teile des jeweiligen Pulvers bezogen auf Polymer,
430 Gew.-Teile Kreide (Carbocia 80, Carbocia) (Füllstoff),
0,5 Gew.-Teile Schaumhilfsmittel (Natriumlaurylsulfat).

Die Angaben in Gew.-Teile beziehen sich auf das Trockengewicht der Teppichbeschichtungs-Zusammensetzung.

Die Gesamtmenge aus den Antiblockmitteln des jeweiligen Pulvers und den Füllstoffen entsprach also der Füllstoffmenge der Vergleichsbeispiele mit D1 bis D6.

Wasser wurde in einer Menge zugesetzt, so dass Teppichbeschichtungs-Zusammensetzungen mit einem Festgehalt von 81,5% resultierten.

Zur Herstellung einer Teppichbeschichtungs-Zusammensetzung wurde das Wasser vorgelegt, das jeweilige Pulver wurde darin während 5 min dispergiert und anschließend mit dem Füllstoff und dem Schaumhilfsmittel versetzt. Es wurde kein Verdickungsmittel zugesetzt.

Die Teppichbeschichtungs-Zusammensetzungen hatten je einen Füllgrad von 450%.

Die Endviskosität wurde analog dem Vergleichsbeispiel auf 6500 mPa s eingestellt (Messung mit Brookfield RV Messgerät mit Spindel 4, 20 Upm, bei 25°C). Im Allgemeinen sind Endviskositäten von 6000 bis 7000 mPa s akzeptabel.

### Herstellung der Teppiche:

Die jeweilige, oben beschriebene Teppichbeschichtungs-Zusammensetzung wurde 3 Minuten mit einer Küchenmaschine aufgeschäumt, so dass Schaumlitergewichte von 950 bis 1015 g/l erreicht wurden.

Als Vorstrich wurden 148 g der jeweiligen, aufgeschäumten Teppichbeschichtungs-Zusammensetzung gleichmäßig auf einen 38 cm X 33 cm großen Tuftrohteppich verteilt (Schlingenpol Tuftteppich, 100 % Polyamid; 550 g/m² Polgewicht; Qualität Helsinki; Hersteller: Firma Edel).

Anschließend wurden als Zweitstrich 60 g der jeweiligen, aufgeschäumten Teppichbeschichtungs-Zusammensetzung aufgebracht und gleichmäßig verteilt. Dann wurde ein textiler Rücken (Polypropylengewebe, Action Back) aufgelegt und zweimal mit einer 1,6 kg schweren Rolle ohne Druck eingearbeitet. Es wurde für 20 Minuten bei 130°C in einem Ofen getrocknet.

### Messung der Noppenauszugskraft:

Die Testung der Noppenauszugskraft erfolgte gemäß ISO 4919 mit Hilfe einer Zwick-Prüfmaschine bei 20°C und 65 % relativer Luftfeuchtigkeit. Der jeweilige Teppich wurde in den Aufsatz am Boden des Messgerätes eingespannt und eine Nadel in eine Teppichschlaufe eingefädelt. An zehn verschiedenen Teppichschlaufen wurde die Kraft bestimmt, welche erforderlich war, um eine Schlaufe aus dem Teppich herauszuziehen. Der Mittelwert der Messergebnisse ergab die Noppenauszugskraft. Die Ergebnisse sind in Tabelle 1 zusammengefasst.

Zur Bestimmung der Nass-Noppenauszugskraft wurden Proben, wie sie für die Bestimmung der Trocken-Noppenauszugskraft hergestellt wurden, für 10 min in Wasser eingelegt, vor der weiteren Austestung oberflächlich trockengetupft und auf diese Weise von überstehendem Wasser befreit

Die Noppenauszugskraft ist ein Maß für die Güte der Noppenbindung durch den Vorstrich und für die Abnutzungseigenschaften der Teppichoberfläche.

### Messung der Trennfestigkeit:

Die Trennfestigkeit wurde analog zu DIN EN ISO 11857 mit Hilfe einer Zwick-Prüfmaschine bei 20°C und 65% relativer Luftfeuchtigkeit bestimmt. Es wurden drei Proben hergestellt, indem aus dem jeweiligen Teppich in Maschinenlaufrichtung Streifen mit einer Breite von 5 cm und einer Länge von 20 cm zugeschnitten und an der Schmalseite von Hand auf einer Länge von 5 cm getrennt wurden. Jede angetrennte Probe wurde in eine Zwick-Prüfmaschine eingespannt und mit einer Geschwindigkeit von 300 mm/min der Zweitrücken vom Teppich abgetrennt. Der Gesamtmittelwert aus fünf Proben wurde gemäß DIN EN ISO 11857 aus den Mittelwerten der Spitzenwerte je Probe in dem zulässigen Messbereich bestimmt. Dabei wurden die ersten 25% der jeweiligen Messkurve markiert und für die Auswertung nicht berücksichtigt.

Die nächsten 50% des Diagrammschriebs wurden in 5 gleiche Abschnitte geteilt und aus diesen der jeweilige Spitzenwert ermittelt. Die Spitzenwerte wurden zum Mittelwert zusammengefasst und die Mittelwerte wiederum zu Gesamtmittelwert. Die Trennfestigkeit wurde in Newton [N] angegeben.

Zur Bestimmung der Nass-Trennfestigkeit wurden Proben, wie sie für die Bestimmung der Trocken-Trennfestigkeit hergestellt wurden, für 10 min in Wasser eingelegt und vor der weiteren Austestung oberflächlich trockengetupft und auf diese Weise von überstehendem Wasser befreit.

Die Ergebnisse sind in Tabelle 1 zusammengefasst.

**Tabelle 1: anwendungstechnische Eigenschaften der Teppichbeschichtungs-Zusammensetzung:**

| | Tg^{a)} | Trennfestigkeit | Noppenauszugskraft | | Verdicker^{b)} |
|---|---|---|---|---|---|
| | | trocken | trocken | nass | |
| | [°C] | [N] | [N] | [N] | [g/600g] |
| D1 | 16 | 42,0 | 37,1 | 18,5 | 5 |
| D2 | 10 | 53,5 | 39,4 | 15,1 | 2 |
| D3 | -7 | 32,3 | 42,9 | 19,5 | 7 |
| D5 | 20 | 50,5 | 47,2 | 17,9 | 1 |
| D6 | 5 | 34,9 | 34,2 | 15,5 | 1 |
| P1 | 16 | 36,7 | 48,9 | 21,9 | - |
| P2 | 10 | 42,4 | 49,7 | 16,4 | - |
| P3 | -7 | 28,6 | 53,5 | 20,9 | - |
| P5 | 20 | 49,5 | 48,5 | 19,9 | - |
| P6 | 5 | 32,9 | 47,2 | 19,7 | - |

| | | | | | |
|---|---|---|---|---|---|
| a) Glasübergangstemperatur der Polymere (bestimmt mittels DSC); b) g Verdickungsmittel (Acrylatverdicker Matco TR 10, Matco) auf 600 g Beschichtungsmasse nass. | | | | | |

Wie aus Tabelle 1 ersichtlich, sind die Noppenauszugswerte bei der Verwendung von Polymerpulvern höher als bei den korrespondierenden Dispersionen. Der Unterschied in den Noppenauszugswerten liegt im Bereich von 20%. Die Messungen des Nass-Noppenauszugs zeigen für Polymerpulver widererwarten hohe Noppenauszugswerte, obwohl auf Grund des Trocknungshilfsmittels und Antiblockmittels zu befürchten war, dass die Prüfeigenschaft unter Wassereinfluss dramatisch einbricht.

### Einfluss des Antiblockmittels auf die anwendungstechnischen Eigenschaften:

Die Pulver P7 und P8 wurden analog zu Pulver P2 hergestellt, mit dem einzigen Unterschied, dass bei der Sprühtrocknung zusätzlich die in Tabelle 2 angegebenen Mengen an Bindzil 2040 (Silica, Handelsname der Firma Akzonobel) als zusätzliches Antiblockmittel zugesetzt wurden.

Mit P7 und P8 wurde je eine Teppichbeschichtungs-Zusammensetzung hergestellt wie für P2 beschrieben, mit dem einzigen Unterschied, dass die in Tabelle 2 angegebenen Mengen an Verdünnungswasser zugesetzt wurden, um die Zielviskosität nach Füllstoffzugabe und Schaumhilfsmittel von 6500 mPa s zu erreichen. Akzeptabel sind im Allgemeinen Endviskositäten von 6000 bis 7000 mPas.

Das Verdünnungswasser dient auch als Indikator für die Viskositätserhöhung. Dabei gilt: Je höher der Wasserbedarf, desto höher ist die Formulierungsviskosität bei gleichem Füllgrad.

Aus den so erhaltenen Teppichbeschichtungs-Zusammensetzungen wurden Teppiche hergestellt und ausgetestet, identisch wie mit P2 beschrieben. Die Ergebnisse der Austestung sind in Tabelle 2 zusammengefasst.

**Tabelle 2: Einfluss des Antiblockmittels auf anwendungstechnische Eigenschaften von Teppichen:**

| | Bindzil^{a)} | Verdünnungswasser^{b)} | Trennfestigkeit | Noppenauszugskraft |
|---|---|---|---|---|
| | | | trocken | nass |
| | [Gew.-T] | [g] | [N] | [N] |
| P2 | - | 3,1 | 42,4 | 16,4 |
| P7 | 2,4 | 4,5 | 45,2 | 18,9 |
| P8 | 8,6 | 7,8 | 50,5 | 19,2 |

| | | | | |
|---|---|---|---|---|
| a) Bindzil 2040 (Silica, Handelsname der Firma Akzonobel); die angegebenen Gewichtsteile (Gew.-T) beziehen sich auf die Rezeptur zur Herstellung der Pulver (trocken/trocken); b) die angegebene Menge an Verdünnungswasser bezieht sich auf 100 g Nassgewicht der Teppichbeschichtungs-Zusammensetzung. | | | | |

Aus Tabelle 2 geht hervor, dass mit Antiblockmitteln überraschenderweise die Trennfestigkeit oder die Noppenauszugskraft nach Nasslagerung gesteigert werden kann. Darüber hinaus wurde gefunden, dass sich über die Menge an Antiblockmittel im Dispersionspulver die Viskosität der Beschichtungsmasse einstellen lässt, wobei höhere Antiblockmittel-Mengen zu höheren Viskositäten führen. Ausgedrückt wird diese Abhängigkeit durch den steigenden Wasserbedarf in g/100 g Formulierung nach Zugabe Füllstoff und Schaumhilfsmittel. Der akzeptable Viskositätsbereich von 6000 bis 7000 mPa s lässt sich dann unter Zugabe von Wasser erreichen, was den Gesamtfeststoffgehalt der Beschichtungsmasse beeinflusst. Über die Menge an Antiblockmittel-Zusatz kann nach Bedarf ohne nachträgliche Zugabe von typischerweise eingesetztem Acrylatverdicker die für die jeweilige Teppichrückenbeschichtung erforderliche Zielviskosität erreicht bzw. eingestellt werden.

### Messung der Zugeigenschaften gefüllter Polymerfilme:

Zur Untersuchung der Zugeigenschaften gefüllter Polymerfilme wurden folgende Formulierungen hergestellt:
100 Gew.-Teile (Trockengewicht) D3, D2, P3 bzw. P2,
450 Gew.-Teile Kreide (Carbocia 80, Carbocia) (Füllstoff),
2,77 Gew.-Teile Entschäumer (Agitan P 800, BASF).

Die Angaben in Gew.-Teile beziehen sich auf das Trockengewicht der Teppichbeschichtungs-Zusammensetzung.

Der Entschäumer diente zur Bildung blasenfreier gefüllter Polymerfilme. Die Formulierung hatte einen Füllgrad von 450 Gew.-%. Die Herstellung der Formulierungen erfolgte durch Vorlage von Wasser in einer Menge, so dass die Formulierungs-Zusammensetzung nach Zugabe der oben genannten Komponenten einen Festgehalt von 81,5% erreichte. Dabei wurden Pulver als Trockenkomponente betrachtet. Nach Vorlage von Wasser wurde unter Rühren (Propellerrührer, 900 upm) zunächst das Pulver P2 oder P3 bzw. die Dispersion D2 oder D3 gemeinsam mit dem Entschäumer vorgelegt und nach einer Einarbeitungszeit von 10 Minuten mit Kreide aufgefüllt. Nach der Einarbeitung der Kreide wurde weitere 30 Minuten gerührt. Die Formulierungsmasse wurde mit einem Rakel auf eine Glasscheibe aufgezogen, so dass die in Tabelle 3 aufgeführten Schichtdicken erreicht wurden. Die Vortrocknung bei 23°C und 50% relativer Luftfeuchtigkeit dauerte einen Tag.

Die vorgetrockneten gefüllten Polymerfilme wurden 7 Tage bei 60°C im Trockenschrank und anschließend 7 Tage bei Normklima gelagert (7d 60°C + 7d NK) (Trockenlagerung). Beim Normklima herrschten 23°C und 50% relative Luftfeuchtigkeit).

Im Falle der Nasslagerung wurden die Proben unmittelbar im Anschluss an die eben beschriebene Trockenlagerung für 10 min in Wasser eingelegt und vor der weiteren Austestung oberflächlich trockengetupft (7d 60°C + 7d NK + 10 min nass).

Zur Austestung der gefüllten Polymerfilme wurden Zugversuche durchgeführt analog der DIN 53504 mit Normstäben (Prüfkörper) S3a (klein) bei einer Zuggeschwindigkeit von 50 mm/min. Gemessen wurden die Reißfestigkeit (RF) und Reißdehnung (RD) nach den in DIN 53504 definierten Begriffen. Die Ergebnisse sind in Tabelle 3 zusammengefasst.

**Tabelle 3: Ergebnisse der Zugversuche mit gefüllten Polymerfilmen:**

| | Trockenlagerung | | | Nasslagerung | | |
|---|---|---|---|---|---|---|
| | Filmdicke | RF | RD | Filmdicke | RF | RD |
| | [mm] | [N/mm²] | [%] | [mm] | [N/mm²] | [%] |
| **D3** | 1,25 | 2,8 | 22,70 | 1,18 | 1,46 | 15,12 |
| **D2** | 1,40 | 5,9 | 9,62 | 1,29 | 2,73 | 2,43 |
| **P3** | 1,38 | 1,3 | 0,23 | 1,34 | 1,40 | 4,52 |
| **P2** | 1,43 | 5,4 | 2,37 | 1,41 | 1,86 | 0,97 |

Aus Tabelle 3 geht hervor, dass nach Trockenlagerung (7d 60°C + 7d NK) die Reißdehnung und Reißfestigkeit der Vergleichsdispersionen höher ausfallen, als bei den korrespondierenden Polymerpulvern. Diese Tendenz, wenn auch weniger stark ausgeprägt setzt sich bei der Nasslagerung (7d 60°C + 7d NK + 10 min nass) fort. Überraschend ist, dass die Polymerpulver in der Teppichrückenbeschichtungsformulierung keinen derartigen Nachteil in der Trennfestigkeit oder Noppenauszugskraft (siehe Tabelle 1) zeigen. Im Gegenteil fallen die in Tabelle 1 aufgeführten Prüfergebnisse ähnlich aus bzw. für die Noppenauszugskraft trocken teilweise höher als für die korrespondierende Dispersion. Zudem kann bei der erfindungsgemäßen Vorgehensweise vorteilhafterweise auf den Einsatz von Verdickern verzichtet werden, was einen Formulierungs- und Kostenvorteil in Hinblick auf die Herstellung von Beschichtungsmassen bedeutet.

### Bestimmung der Füllstoffverträglichkeit:

Zur Bestimmung der Füllstoffverträglichkeit von Teppichbeschichtungs-Zusammensetzungen wurden folgende Formulierungen eingesetzt:
100 Gew.-Teile (Trockengewicht) D1, D3, P1 bzw. P3,
1000 Gew.-Teile Kreide (Carbocia 80, Carbocia) (Füllstoff),
2,0 Gew.-Teile Laurylethersulfat (Schaumhilfsmittel),
1-1,5 Gew.-Teile Dispergiermittel (Matcodispersant 40, Matco NVB.V.).

Die Angaben in Gew.-Teile beziehen sich auf das Trockengewicht der Teppichbeschichtungs-Zusammensetzung.

Zur Einstellung des Festgehalts von 79,0 Gew.-% wurden entsprechende Mengen an Wasser zugegeben. Die Formulierung hatten Füllgrade von 1000 Gew.-%.

Die Herstellung der Teppichbeschichtungs-Zusammensetzungen erfolgte analog wie unter der Überschrift "Herstellung der Teppichbeschichtungs-Zusammensetzungen" beschrieben.

Anschließend wurde das Verdickungsmittel Dicrylan EM 15 (Hersteller: Huntsman) in einer Menge solchen Menge zugegeben, dass die in Tabelle 4 angegebenen Endviskositäten erreicht wurden.

### Bestimmung der Füllstoffverträglichkeit:

Hierzu wurde die jeweilige Formulierung für die in Tabelle 4 angegebene Zeit stehen gelassen (ohne Rühren) (bei 23°C im geschlossenen Gefäß), anschließend 30 s gerührt (Propellerrührer, 900 upm) und danach die Viskosität ermittelt (Brookfield RV, Spindel 4, 20 Upm, bei 25°C). Die Ergebnisse der Messung sind in Tabelle 4 aufgeführt.

Überaschenderweise wurde gefunden, dass der erfindungsgemäße Einsatz von Polymerpulvern zu Viskositäts-konstanteren und damit Füllstoff verträglicheren und insgesamt lagerstabileren Teppichbeschichtungs-Zusammensetzungen führt als der entsprechende Einsatz von Polymerdispersionen, wie die Austestungsergebnisse in Tabelle 5 mit den Pulvern P1 und P3 gegenüber den Dispersionen D1 und D3 zeigen - und dies, obwohl eigentlich ein gegenteiliges Ergebnis zu erwarten gewesen war. Denn im Falle der erfindungsgemäßen Teppichbeschichtungs-Zusammensetzungen war aufgrund der mit dem Polymerpulver eingebrachten Trocknungshilfsmittel zu befürchten, dass die Viskositätsstabilität im Vergleich zu den entsprechenden Austestungen mit den Polymerdispersionen erheblich schlechter ausfällt.

Des Weiteren folgt aus Tabelle 4, dass die erfindungsgemäßen Teppichbeschichtungs-Zusammensetzungen auch in hochgefüllten Formulierungen (1000 Gew.-% Füllstoffgehalt) stabiler sind als entsprechende Formulierungen mit Polymerdispersionen. Auf Grund des Zusatzes an Trocknungshilfsmittel (Polyvinylalkohol) in den Polymerpulvern war in den erfindungsgemäßen Formulierungen an sich mit deutlichen Änderungen der Formulierungsviskosität während der 7-tägigen Lagerung zu rechnen. Überaschenderweise wurden solche nachteiligen Effekte nicht beobachtet, sondern eine Verbesserung der Lagerstabilität.

**Tabelle 4: Viskositätsstabilität von Teppichbeschichtungs-Zusammensetzungen:**

| | Lagerung [Tage] | Viskosität [mPa s] |
|---|---|---|
| D1 | 0 | 2900 |
| | 1 | 2640 |
| | 7 | 2720 |
| P1 | 0 | 3030 |
| | 1 | 3130 |
| | 7 | 3100 |
| D3 | 0 | 3390 |
| | 1 | 2940 |
| | 7 | 2750 |
| P3 | 0 | 3490 |
| | 1 | 3500 |
| | 7 | 3430 |

## Patentansprüche

1. Verwendung von Polymeren auf Basis ethylenisch ungesättigter Monomere in Teppichbeschichtungs-Zusammensetzungen zur Teppichherstellung, **dadurch gekennzeichnet, dass** zur Herstellung der Teppichbeschichtungs-Zusammensetzungen ein oder mehrere Polymere auf Basis ethylenisch ungesättigter Monomere in Form von in Wasser redispergierbaren Pulvern eingesetzt werden,
wobei die Polymere ausgewählt werden aus der Gruppe umfassend Mischpolymerisate von einem oder mehreren Vinylestern mit 1 bis 50 Gew.-% Ethylen;
Mischpolymerisate von Vinylacetat mit 1 bis 50 Gew.-% Ethylen und 1 bis 50 Gew.-% von einem oder mehreren weiteren Comonomeren aus der Gruppe der Vinylester mit 1 bis 13 C-Atomen im Carbonsäurerest;
Mischpolymerisate von ein oder mehreren Vinylestern, 1 bis 50 Gew.-% Ethylen und 1 bis 60 Gew.-% (Meth)Acrylsäureester von unverzweigten oder verzweigten Alkoholen mit 1 bis 15 C-Atomen;
Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% (Meth)Acrylsäureester von unverzweigten oder verzweigten Alkoholen mit 1 bis 17 C-Atomen, welche noch 1 bis 40 Gew.-% Ethylen enthalten;
Mischpolymerisate mit ein oder mehreren Vinylestern, 1 bis 50 Gew.-% Ethylen und 1 bis 60 Gew.-% Vinylchlorid sowie gegebenenfalls weiteren Vinylestern und/oder (Meth)Acrylsäureestern;
wobei sich die Angaben in Gew.-% auf jeweils 100 Gew.-% aufaddieren.

2. Verwendung von Polymeren auf Basis ethylenisch ungesättigter Monomere in Teppichbeschichtungs-Zusammensetzungen gemäß Anspruch 1, **dadurch gekennzeichnet, dass** die Teppichbeschichtungs-Zusammensetzungen zur Herstellung von Tufting-Teppichen, Webteppichen oder Nadelfilzteppichen verwendet werden.

3. Verwendung von Polymeren auf Basis ethylenisch ungesättigter Monomere in Teppichbeschichtungs-Zusammensetzungen gemäß Anspruch 1 oder 2, **dadurch gekennzeichnet, dass** zur Herstellung der Teppichbeschichtungs-Zusammensetzungen ein oder mehrere Polymere auf Basis ethylenisch ungesättigter Monomere in Form von in Wasser redispergierbaren, Schutzkolloid-stabilisierten Pulvern eingesetzt werden.

4. Verwendung von Polymeren auf Basis ethylenisch ungesättigter Monomere in Teppichbeschichtungs-Zusammensetzungen gemäß Anspruch 3, **dadurch gekennzeichnet, dass** als Schutzkolloide ein oder mehrere teilverseifte Polyvinylalkohole mit einem Hydrolysegrad von 80 bis 95 Mol% und einer Höpplerviskosität von 1 bis 40 mPas eingesetzt werden (Bestimmung der Höpplerviskosität nach DIN 53015, bei 20°C, in 4 %-iger wässriger Lösung).

5. Verwendung von Polymeren auf Basis ethylenisch ungesättigter Monomere in Teppichbeschichtungs-Zusammensetzungen gemäß Anspruch 3, **dadurch gekennzeichnet, dass** als Schutzkolloide 2 bis 10 Gew.-% an einem oder mehreren teilverseiften, niedermolekularen Polyvinylalkoholen mit einem Hydrolysegrad von 80 bis 95 Mol-% und einer Höppler-Viskosität von 1 bis ≤ 5 mPas, und gegebenenfalls ein oder mehrere teilverseifte, höhermolekulare Polyvinylalkohole mit einem Hydrolysegrad von 80 bis 95 Mol-% und einer Höppler-Viskosität > 5 bis 40 mPas, und gegebenenfalls
ein oder mehrere vollverseifte, höhermolekulare Polyvinylalkohole mit einem Hydrolysegrad von 96 bis 100 Mol-% und einer Höppler-Viskosität von 10 bis 56 mPas eingesetzt werden,
wobei sich die Angaben in Gew.-% auf das Gesamtgewicht der Polymere auf Basis ethylenisch ungesättigter Monomere beziehen und die Bestimmung der Höppler-Viskosität nach DIN 53015, bei 20°C, in 4 %-iger wässriger Lösung erfolgt.

6. Verwendung von Polymeren auf Basis ethylenisch ungesättigter Monomere in Teppichbeschichtungs-Zusammensetzungen gemäß Anspruch 1 bis 5, **dadurch gekennzeichnet, dass** ein oder mehrere Polymere auf Basis ethylenisch ungesättigter Monomere in Form von in Wasser redispergierbaren, gegebenenfalls Schutzkolloid-stabilisierten Pulvern eingesetzt werden, die ein oder mehrere Antiblockmittel enthalten ausgewählt werden aus der Gruppe umfassend Carbonate, Talk, Gips, Kieselsäure, Kaoline und Silicate.

7. Verwendung von Polymeren auf Basis ethylenisch ungesättigter Monomere in Teppichbeschichtungs-Zusammensetzungen gemäß Anspruch 6, **dadurch gekennzeichnet, dass** die Antiblockmittel Teilchengrößen von 150 nm bis 40 µm haben (Bestimmung mit dem Messgerät Coulter LS - Tornado Dry Powder System).

8. Verwendung von Polymeren auf Basis ethylenisch ungesättigter Monomere in Teppichbeschichtungs-Zusammensetzungen gemäß Anspruch 1 bis 7, **dadurch gekennzeichnet, dass** die Polymere in Form von in Wasser redispergierbaren Pulvern oder die Teppichbeschichtungs-Zusammensetzungen keine Emulgatoren enthalten.

9. Verwendung von Polymeren auf Basis ethylenisch ungesättigter Monomere in Teppichbeschichtungs-Zusammensetzungen gemäß Anspruch 1 bis 8, **dadurch gekennzeichnet, dass** die Teppichbeschichtungs-Zusammensetzungen einen Feststoffgehalt von 72 bis 83 Gew.-% haben, bezogen auf das Gesamtgewicht der Teppichbeschichtungs-Zusammensetzungen.

## Claims

1. Use of polymers based on ethylenically unsaturated monomers in carpet coating compositions for the manufacture of carpets, **characterized in that** the carpet coating compositions are prepared using one or more polymers based on ethylenically unsaturated monomers in the form of water-redispersible powders, wherein the polymers are selected from the group comprising copolymers of one or more vinyl esters with 1 to 50 wt% of ethylene;
copolymers of vinyl acetate with 1 to 50 wt% of ethylene and 1 to 50 wt% of one or more further comonomers from the group of vinyl esters having 1 to 13 carbon atoms in the carboxylic acid moiety; copolymers of one or more vinyl esters, 1 to 50 wt% of ethylene and 1 to 60 wt% of (meth)acrylic ester of branched or unbranched alcohols having 1 to 15 carbon atoms;
copolymers with 30 to 75 wt% of vinyl acetate, 1 to 35 wt% of vinyl laurate or vinyl ester of an alpha-branched carboxylic acid having 9 to 13 carbon atoms, and also 1 to 30 wt% of (meth)acrylic ester of branched or unbranched alcohols having 1 to 17 carbon atoms which additionally contain 1 to 40 wt% of ethylene;
copolymers with one or more vinyl esters, 1 to 50 wt% of ethylene and 1 to 60 wt% of vinyl chloride and also optionally further vinyl esters and/or (meth)acrylic esters;
wherein the recitations in wt% add up to 100 wt% in each case.

2. Use of polymers based on ethylenically unsaturated monomers in carpet coating compositions according to Claim 1, **characterized in that** the carpet coating compositions are used in the manufacture of tufted carpets, woven carpets or needlefelt carpets.

3. Use of polymers based on ethylenically unsaturated monomers in carpet coating compositions according to Claim 1 or 2, **characterized in that** the carpet coating compositions are prepared using one or more polymers based on ethylenically unsaturated monomers in the form of water-redispersible protective colloid-stabilized powders.

4. Use of polymers based on ethylenically unsaturated monomers in carpet coating compositions according to Claim 3, **characterized in that** protective colloids used comprise one or more partially hydrolyzed polyvinyl alcohols having a hydrolysis degree of 80 to 95 mol% and a Hoeppler viscosity of 1 to 40 mPas (determination of Hoeppler viscosity to DIN 53015, at 20°C, in 4% aqueous solution).

5. Use of polymers based on ethylenically unsaturated monomers in carpet coating compositions according to claim 3, **characterized in that** protective colloids used comprise from 2 to 10 wt% of one or more partially hydrolyzed low molecular weight polyvinyl alcohols having a hydrolysis degree of 80 to 95 mol% and a Hoeppler viscosity of 1 to ≤ 5 mPas, and optionally one or more partially hydrolyzed high molecular weight polyvinyl alcohols having a hydrolysis degree of 80 to 95 mol% and a Hoeppler viscosity > 5 to 40 mPas, and optionally one or more fully hydrolyzed high molecular weight polyvinyl alcohols having a hydrolysis degree of 96 to 100 mol% and a Hoeppler viscosity of 10 to 56 mPas, wherein the recitations in wt% are based on the total weight of the polymers based on ethylenically unsaturated monomers and the Hoeppler viscosity is determined to DIN 53015, at 20°C, in 4% aqueous solution.

6. Use of polymers based on ethylenically unsaturated monomers in carpet coating compositions according to Claim 1 or 2 or 3 or 4 or 5, **characterized in that** one or more polymers based on ethylenically unsaturated monomers are used in the form of water-redispersible, optionally protective colloid-stabilized powders containing one or more antiblocking agents selected from the group comprising carbonates, talcum, plaster, silica, kaolins and silicates.

7. Use of polymers based on ethylenically unsaturated monomers in carpet coating compositions according to Claim 6, **characterized in that** the antiblocking agents have particle sizes of 150 nm to 40 µm (as determined using a Coulter LS - Tornado Dry Powder System).

8. Use of polymers based on ethylenically unsaturated monomers in carpet coating compositions according to Claim 1 or 2 or 3 or 4 or 5 or 6 or 7, **characterized in that** the polymers in the form of water-redispersible powders or the carpet coating compositions contain no emulsifiers.

9. Use of polymers based on ethylenically unsaturated monomers in carpet coating compositions according to Claim 1 or 2 or 3 or 4 or 5 or 6 or 7 or 8, **characterized in that** the carpet coating compositions have a solids content of 72 to 83 wt%, based on the total weight of the carpet coating compositions.

## Revendications

1. Utilisation de polymères à base de monomères à insaturation éthylénique dans des compositions de revêtement de tapis pour la fabrication de tapis, **caractérisée en ce que**
dans la préparation des compositions de revêtement de tapis on utilise un ou plusieurs polymères à base de monomères à insaturation éthylénique sous forme de poudres redispersables dans l'eau,
les polymères étant choisis dans le groupe comprenant des copolymères d'un ou de plusieurs esters vinyliques avec 1 à 50 % en poids d'éthylène ;
des polymères d'acétate de vinyle avec 1 à 50 % en poids d'éthylène et 1 à 50 % en poids d'un ou de plusieurs autres comonomères choisis dans le groupe des esters vinyliques ayant de 1 à 13 atomes de carbone dans le radical acide carboxylique ;
des copolymères d'un ou de plusieurs esters vinyliques, 1 à 50 % en poids d'éthylène et 1 à 60 % en poids d'esters d'acide (méth)acrylique avec des alcools ramifiés ou non ramifiés ayant de 1 à 15 atomes de carbone ;
des copolymères avec 30 à 75 % en poids d'acétate de vinyle, 1 à 30 % en poids de laurate de vinyle ou d'ester vinylique d'un acide carboxylique alpha-ramifié ayant de 9 à 13 atomes de carbone, ainsi que 1 à 30 % en poids d'esters d'acide (méth)acrylique avec des alcools ramifiés ou non ramifiés ayant de 1 à 17 atomes de carbone, qui contiennent encore 1 à 40 % en poids d'éthylène ; des copolymères avec un ou plusieurs esters vinyliques, 1 à 50 % en poids d'éthylène et 1 à 60 % en poids de chlorure de vinyle ainsi qu'éventuellement d'autres esters vinyliques et/ou esters d'acide (méth)acrylique ; la somme des données en % en poids étant chaque fois égale à 100 % en poids.

2. Utilisation de polymères à base de monomères à insaturation éthylénique dans des compositions de revêtement de tapis selon la revendication 1, **caractérisée en ce qu'**on utilise les compositions de revêtement de tapis pour la fabrication de tapis tuftés, de tapis tissés ou de tapis aiguilletés.

3. Utilisation de polymères à base de monomères à insaturation éthylénique dans des compositions de revêtement de tapis selon la revendication 1 ou 2, **caractérisée en ce que** dans la préparation des compositions de revêtement de tapis on utilise un ou plusieurs polymères à base de monomères à insaturation éthylénique sous forme de poudres redispersables dans l'eau, stabilisées avec des colloïdes protecteurs.

4. Utilisation de polymères à base de monomères à insaturation éthylénique dans des compositions de revêtement de tapis selon la revendication 3, **caractérisée en ce qu'**en tant que colloïdes protecteurs on utilise un ou plusieurs poly(alcool vinylique)s partiellement saponifiés ayant un degré d'hydrolyse de 80 à 95 % en moles et une viscosité Höppler de 1 à 40 mPa.s (détermination de la viscosité Höppler selon DIN 53015, à 20 °C, en solution aqueuse à 4 %).

5. Utilisation de polymères à base de monomères à insaturation éthylénique dans des compositions de revêtement de tapis selon la revendication 3, **caractérisée en ce qu'**en tant que colloïdes protecteurs on utilise 2 à 10 % en poids d'un ou de plusieurs poly(alcool vinylique)s de faible masse moléculaire, partiellement saponifiés, ayant un degré d'hydrolyse de 80 à 95 % en moles et une viscosité Höppler de 1 à ≤ 5 mPa.s, et éventuellement un ou plusieurs poly(alcool vinylique)s de masse moléculaire élevée, partiellement saponifiés, ayant un degré d'hydrolyse de 80 à 95 % en moles et une viscosité Höppler de > 5 à 40 mPa.s, et éventuellement
un ou de plusieurs poly(alcool vinylique)s de masse moléculaire élevée, totalement saponifiés, ayant un degré d'hydrolyse de 96 à 100 % en moles et une viscosité Höppler de 10 à 56 mPa.s,
les données en % en poids se rapportant au poids total des polymères à base de monomères à insaturation éthylénique et la détermination de la viscosité Höppler s'effectuant selon DIN 53015, à 20 °C, en solution aqueuse à 4 %.

6. Utilisation de polymères à base de monomères à insaturation éthylénique dans des compositions de revêtement de tapis selon l'une quelconque des revendication 1 à 5, **caractérisée en ce qu'**on utilise un ou plusieurs polymères à base de monomères à insaturation éthylénique sous forme de poudres redispersables dans l'eau, éventuellement stabilisées avec des colloïdes protecteurs, qui contiennent un ou plusieurs antiagglomérants choisis dans le groupe comprenant des carbonates, le talc, le gypse, la silice, les kaolins et les silicates.

7. Utilisation de polymères à base de monomères à insaturation éthylénique dans des compositions de revêtement de tapis selon la revendication 6, **caractérisée en ce que** les antiagglomérants ont des tailles de particules de 150 nm à 40 µm (déterminées avec l'appareil de mesure Coulter LS - Tornado Dry Powder System).

8. Utilisation de polymères à base de monomères à insaturation éthylénique dans des compositions de revêtement de tapis selon l'une quelconque des revendications 1 à 7, **caractérisée en ce que** les polymères sous forme de poudres redispersables dans l'eau ou les compositions de revêtement de tapis ne contiennent pas d'émulsifiants.

9. Utilisation de polymères à base de monomères à insaturation éthylénique dans des compositions de revêtement de tapis selon l'une quelconque des revendications 1 à 8, **caractérisée en ce que** les compositions de revêtement de tapis ont une teneur en matière solide de 72 à 83 % en poids, par rapport au poids total des compositions de revêtement de tapis.
